## Europäisches Patentamt

## European Patent Office

## Office européen des brevets

(11) Veröffentlichungsnummer: **0 109 034**
**B1**

(12) # EUROPÄISCHE PATENTSCHRIFT

(45) Veröffentlichungstag der Patentschrift:
**10.12.86**

(51) Int. Cl.⁴: **B 23 F 21/16**

(21) Anmeldenummer: **83111135.6**

(22) Anmeldetag: **08.11.83**

(54) **Hochleistungs-Wälzfräser.**

(30) Priorität: **11.11.82 DE 3241696**

(43) Veröffentlichungstag der Anmeldung:
**23.05.84 Patentblatt 84/21**

(45) Bekanntmachung des Hinweises auf die Patenterteilung:
**10.12.86 Patentblatt 86/50**

(84) Benannte Vertragsstaaten:
**AT FR GB IT SE**

(56) Entgegenhaltungen:
**EP - A - 0 070 489**
**CH - A - 617 612**

(73) Patentinhaber: **Wälztechnik Saacke-Zorn GmbH & Co. K.G., Eutinger Strasse 164, D-7530 Pforzheim-Eutingen (DE)**

(72) Erfinder: **Zorn, Walter, Ing. grad., Unterer Wingertweg 152, D-7530 Pforzheim (DE)**

(74) Vertreter: **Hubbuch, Helmut, Dipl.-Ing et al, Patentanwälte Dr. Rudolf Bauer Dipl.-Ing. Helmut Hubbuch Dipl.-Phys. Ulrich Twelmeier Westliche Karl-Friedrich-Strasse 29-31, D-7530 Pforzheim (DE)**

ACTORUM AG

## Beschreibung

Die Erfindung betrifft einen Hochleistungs-Wälzfräser zur Herstellung von Verzahnungen im Abwälzverfahren, mit in Quernuten eines zylindrischen Grundkörpers einsetzbaren, kammartigen Schneidzahnstollen, deren einzelne Zahnköpfe über dem Grundkörper eine schraubenlinienförmige Anordnung ergeben.

Es sind Wälzfräser mit eingesetztem Schneidplättchen bekannt. Diese bestehen beispielsweise nach der DE-A 17 52 707 aus Scheiben mit jeweils einem umlaufenden Schneidzahn-Schraubengang um die Bearbeitung der Plattensitze für die Schneidplättchen zu ermöglichen. Die einzelnen Scheiben sind sodann mittels durchgesteckten Bolzen zum eigentlichen Wälzfräser verbunden. Dies bedingt eine einwandfreie Passgenauigkeit der einzelnen Scheiben zueinander und bringt beim Schneidvorgang grosse Scherkräfte auf die Verbindungsbolzen.

Desweiteren ist es nach der DE-A 30 39 076 bekannt die Schneidzähne mit den Schneidplättchen als Sektorstück auszubilden und in schraubenlinienförmigen Nutgängen auf den zylindrischen Grundkörper mit Schrauben zu befestigen, um die Bearbeitung der Plattensitze für die Schneidplättchen zu ermöglichen. Die schraubenlinienförmigen Sektorstücke bringen hierbei einen grossen Herstellungsaufwand mit sich und überdies müssen hier die ganzen Schnittkräfte beim Schneidvorgang allein von den Befestigungsschrauben aufgenommen werden.

Auch können hier, wie auch bei der ersten Ausführungsform die Zahnnuten nicht bis zum Grundkörper gebracht werden, um den Befestigungsschrauben zwischen den Schneidzähnen noch Material zu geben, was eine Verringerung der Freiräume zur Spanabfuhr mit sich bringt. Schliesslich sind die Schneidplättchen in beiden Fällen an den Zähnen mittels durchgreifenden Schrauben auswechselbar zu befestigen, was eine Materialschwächung derselben bedeutet und deren Aufteilung erforderlich macht und damit die Schneidenzahl pro Gang verringert.

Schliesslich ist nach der den Oberbegriff des Patentanspruchs 1 bildenden AT-A 301 300 ein Abwälzfräser bekannt mit einem Grundkörper, an dem die einzelnen Schneidplatten unter Zwischenschaltung von Unterlegleisten und gegebenenfalls mit seitlichen Stützplatten mittels Klemmorganen festgehalten sind, wobei die Auflageflächen der Unterlegleisten in zur Fräserachse parallelen Ebenen liegen. Hierbei müssen die Schneidplatten hinterschnitten sein, was deren Herstellung und Nachschleifen erschwert. Überdies ist durch deren Befestigungsweise mit Spannschrauben im Grundkörper deren Zahl über den Umfang begrenzt und deren Halterung am Schneidkopf nicht sichergestellt, so dass hier beim Schneidvorgang Vibrationen auftreten können.

Demgegenüber ist es Aufgabe der vorliegenden Erfindung einen gattungsgemässen Wälzfräser so auszubilden, dass Wendeschneideinsätze von geometrisch einfacher Form anwendbar sind und die für deren exakte Positionierung massgebenden Flächen der in den Zahnköpfen angeordneten Aussparungen mit vergleichsweise geringem technischen Aufwand herstellbar sind.

Zur Lösung dieser Aufgabe kennzeichnet sich der Hochleistungs-Wälzfräser nach dem Oberbegriff des Anspruchs 1 gemäss der Erfindung dadurch, dass bei in Schneidrichtung vorstehenden Zahnköpfen der Schneidstellen, die Aussparungen in bekannter Kreuzverzahnungsanordnung jeweils an einer der beiden Zahnkopfflanken in Form eines vierseitig offenen Nutwinkels angeordnet sind und die Wendeschneideinsätze als leistenförmige, im Querschnitt rechteckige Wendeschneideinsätze ausgebildet sind, die mit je einer Flanken- und einer Kopfschneide durch die Freiwinkel der Schneiden bestimmende Neigung der Winkelnutflächen im Schnitt stehen. Durch diese Anordnung der Schneidleisten in offenen Nuten können dieselben durchgehend als Pass- und Auflageflächen für die Schneidleisten zur Erzielung höchster Genauigkeit geschliffen werden.

Die Schneidzahnstollen können hierbei jeweils mit dem Innenwinkel am vorstehenden Zahnkopf als Passung auf dem jeweiligen Nutrand des Grundkörpers aufsitzen und mit ihrem Stollenfuss nicht die ganze Nuttiefe im Grundkörper erreichen, womit eine Fusspassung in der Nut, welche schwieriger zu erlangen ist, entfällt. Hierbei kann im Grundkörper eine Spiralrillung eingelassen sein, in welcher sich die Schneidleisten jeweils beim Fräsen gegenüber Abkippen abstützen.

Weitere Einzelheiten des Hochleistungs-Wälzfräsers gemäss der Erfindung sind beispielsweise in der Zeichnung als bevorzugte Ausführungsbeispiele dargestellt und nachfolgend beschrieben und zwar zeigen:

Figur 1 die perspektivische Aufsicht auf einen erfindungsgemässen Wälzfräser,

Figur 2 und 3 den Längsschnitt und die Draufsicht teilweise geschnitten auf einen Fräserausschnitt mit Fräszähnen,

Figur 4 den Querschnitt hierzu und

Figur 5 die Ansicht einer weiteren Ausführungsform von Fräszähnen mit Schneidleisten.

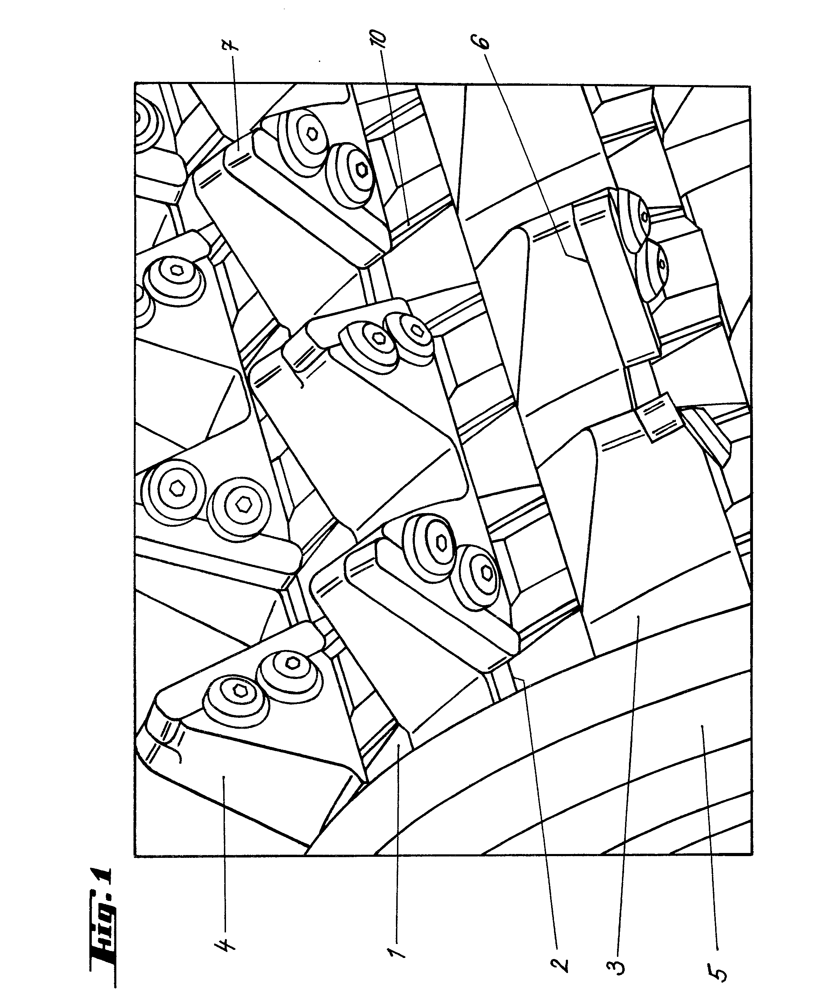

Wie aus der Zeichnung, insbes. nach Figur 1 ersichtlich wird, besteht der Hochleistungs-Wälzfräser aus einem zylindrischen Grundkörper 1 mit in Quernuten 2 eingesetzten Schneidzahnstollen 3, wobei deren Schneidzähne mit Zahnköpfen 4 eine schraubenlinienförmige Anordnung ergeben. Die Schneidzahnstollen 3 sind beidseits angeschrägt und in ihren Quernuten 2 mittels gegengeschrägten, aufgeschrumpften Aussenringen 5 im Grundkörper 1 verspannt.

Die Zahnköpfe 4 stehen gemäss der Erfindung in Schneidrichtung vor, sodass die jeweilige Schneidflanke mit einem vierseitig offenen Nutwinkel 6 zur Aufnahme jeweils einer Schneidleiste 7 mit freien Enden und freien Schneidflächen zu versehen sind. Hierdurch können bei offenen Winkelnuten 6 die Sitzflächen der Schneidleisten 7 präzis geschliffen werden, was eine genaue Einhaltung der vorgegebenen Freiwinkel ermöglicht.

Im übrigen sitzen die Schneidzahnstollen 3 jeweils mit dem Innenwinkel 8 am vorstehenden Zahnkopf 4 dem jeweiligen Nutrand 9 des Grundkörpers 1 auf, sodass nicht der Fuss des Schneidzahnstollens 3 in der Quernut 2 als Passung dienen muss, was die Bearbeitung vereinfacht, wie dies Figur 4 zeigt.

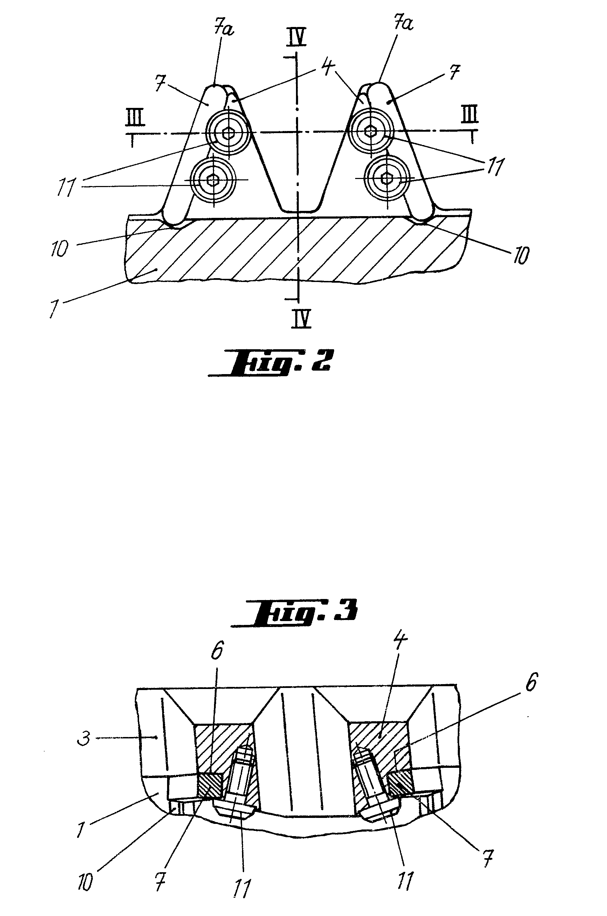

Im Grundkörper 1 ist desweiteren eine Spiralrillung 10 eingelassen, in welcher sich die Schneidleisten 7 jeweils beim Fräsen zum Verhindern des Abkippens abstützen, wie dies aus Figur 2 ersichtlich wird.

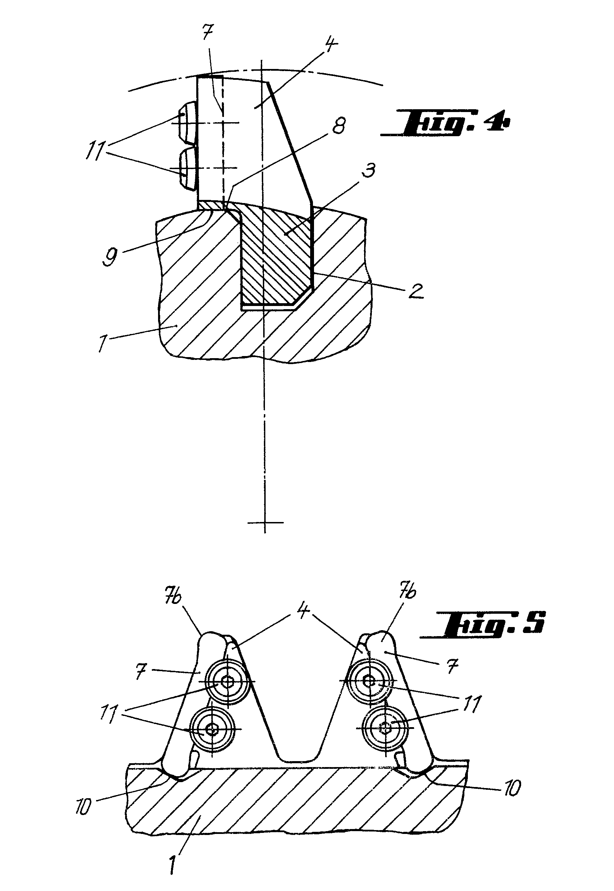

Die Schneidleisten 7 werden von in der Zahnbrust 4 eingebrachten Schirmschrauben 11 mit in der Zahnbrust teilweise versenktem Schraubkopf im Nutwinkel 6 festgespannt. Hierdurch wird das Wenden und Auswechseln der Schneidleisten 7 beim Einsatz in der Wälzfräsmaschine durch kurzes Lösen der Schirmschrauben 11 wesentlich erleichtert, wie dies Figur 3 zeigt. Die Schirmschrauben 11 für den Schneidleistenbesatz 7 an den linken Schneidflanken ist hierbei linksdrehend und für den rechten Schneidleistenbesatz 7 rechtsdrehend angebracht.

Die Schneidleisten 7 selbst sind in Form rechteckiger Quader mit beidseits abgerundeten Enden 7a zum insgesamt 8-fachen Wenden ausgebildet, wie dies in Figur 2 und 3 ersichtlich wird. Für eine entsprechende Zahnbearbeitung mit hinterschnittenem Zahngrund lassen sich auch Schneidleisten 7 mit wechselweisen Protuberanz-Auswölbungen 7b an ihren gerundeten Enden verwenden, wie dies in Figur 5 verdeutlicht ist.

Im übrigen kann die Winkelnut 6 im jeweiligen Zahnkopf 4 zum Einspannen der Schneidleisten 7 mit Flankenfreiwinkel von 0° bis 15° und mit Kopffreiwinkel von 0° bis 30° angeordnet sein; beim dargestellten Ausführungsbeispiel liegen beide Freiwinkel bei 6°. Die Zahnköpfe 4 sind hierbei entsprechend der Lage der Schneidleisten 7 am Zahnkopf und Flanke geschrägt.

Wie aus Figur 1 ersichtlich wird, wechseln die Schneidleisten 7 an nebeneinanderliegenden Zahnköpfen 4 jedes Schneidzahnstollen 3 rechts- und linksseitig zueinander und ebenso auch bei aufeinanderfolgenden Zahnstollen 3 bei schraubenlinienförmiger Zahnanordnung 4. Die Quernuten 2 sind in ungerader Zahl zur Aufnahme der Schneidzahnstollen 3 im Grundkörper 1 angeordnet, insbes. für 13 Zahnstollen.

## Patentansprüche

1. Hochleistungs-Wälzfräser zur Herstellung von Verzahnungen im Abwälzverfahren, mit in Quernuten (2) eines zylindrischen Grundkörpers (1) einsetzbaren, kammartigen Schneidzahnstollen (3), deren einzelne Zahnköpfe (4) über dem Grundkörper eine schraubenlinienförmige Anordnung ergeben, wobei die Zahnköpfe Aussparungen aufweisen, deren Flächen Anlagen für die axiale und radiale Positionierung von mit Kopf- und Flankenschneiden versehenen Wendeschneideinsätzen (7) bilden, wobei die Wendeschneidsätze durch Klemmelemente (11), in den Aussparungen festspannbar sind, dadurch gekennzeichnet, dass bei in Schneidrichtung vorstehenden Zahnköpfen (4) der Schneidstollen, die Aussparungen in bekannter Kreuzverzahnungsanordnung jeweils an einer der beiden Zahnkopfflanken in Form eines vierseitig offenen Nutwinkels (6) angeordnet sind und die Wendeschneideinsätze als leistenförmige, im Querschnitt rechteckige Wendeschneideinsätze (7) ausgebildet sind, die mit je einer Flanken- und einer Kopfschneide durch die Freiwinkel der Schneiden bestimmende Neigung der Winkelnutflächen im Schnitt stehen.

2. Hochleistungs-Wälzfräser nach Anspruch 1, dadurch gekennzeichnet, dass im Grundkörper (1) eine Spiralrillung (10) eingearbeitet ist, in welcher sich die Schneidleisten (7) jeweils beim Fräsen gegenüber Abkippen abstützen.

3. Hochleistungs-Wälzfräser nach einem der Ansprüche 1 oder 2, dadurch gekennzeichnet, dass die Schneidleisten (7) mit übergreifenden Schirmschrauben (11) mit in der Zahnbrust teilweise versenktem Schraubkopf im Nutwinkel (6) festspannbar sind.

4. Hochleistungs-Wälzfräser nach Anspruch 3, dadurch gekennzeichnet, dass die Schirmschrauben (11) für die Wendeschneidleisten (7) an den linken Schneidflanken linksdrehend und für die rechten Schneidleisten (7) rechtsdrehend sind.

5. Hochleistungs-Wälzfräser nach einem der vorhergehenden Ansprüche, dadurch gekennzeichnet, dass die Schneidleisten (7) allseits jeweils zwischen Flanken- und Kopfschneiden abgerundete Enden (7a) besitzen.

6. Hochleistungs-Wälzfräser nach einem der vorhergehenden Ansprüche, dadurch gekennzeichnet, dass die Schneidleisten (7) an ihren abgerundeten Enden wechselweise Protuberanz-Auswölbungen (7b) aufweisen.

## Revendications

1. Fraise-mère développante de grand rendement pour la fabrication de dentures selon le procédé à développante, avec outils à crémaillères (3), logeables dans les rainures transversales (2) d'un corps de base cylindrique (1), outils dont les divers sommets de dents (4) forment, au-dessus du corps de base, un ensemble hélicoidal, les sommets de dents présentant des évidements, dont les faces forment des plans pour le positionnement axial et radial de plaquettes réversibles (7) dotées de tranchants pour sommets et flancs, les plaquettes réversibles étant serrables dans les évidements à l'aide d'éléments de serrage (11), caractérisée par le fait que, sur les sommets de dents (4) des outils à crémaillère, en saillie dans le sens de la coupe, les évidements sont disposés selon le principe bien connu de la denture étagée, sur l'un des deux flancs du sommet de dent sous la forme d'un angle de rainure ouvert sur quatre côtés et que les plaquettes réversibles sont conçues en tant que plaquettes réversibles (7) en forme de réglettes et de section rectangulaire, lesquelles sont perpendiculaires à un tranchant de flanc et à un tranchant de sommet du fait de l'inclinaison des faces de rainures angulaires qui déterminent les angles de dépouille des tranchants.

2. Fraise-mère développante de grand rendement d'après la revendication n° 1, caractérisée par le fait qu'une gorge hélicoidale (10) est incorporée dans le corps de base (1), gorge dans laquelle les réglettes de coupe (7) prennent appui lors du fraisage contre le basculement.

3. Fraise-mère développante de grand rendement d'après l'une des revendications n° 1 ou 2, caractérisée par le fait que les réglettes de coupe (7) sont serrables dans l'angle de la rainure (6) à l'aide de vis à tête large (11) avec tête de vis noyée en partie dans la face d'attaque.

4. Fraise-mère développante de grand rendement d'après la revendication n° 3, caractérisée par le fait que les réglettes de coupe réversibles (7) tournent à gauche sur les flancs coupants gauches et que celles pour les réglettes de coupe de droite (7) tournent à droite.

5. Fraise-mère développante de grand rendement d'après l'une des revendications précédentes, caractérisée par le fait que les réglettes de coupe (7) possèdent de tous côtés des extrémités arrondies (7a) entre les tranchants de flancs et de sommets.

6. Fraise-mère développante de grand rendement d'après l'une des revendications précédentes, caractérisée par le fait que les réglettes de coupe (7) présentent en alternance des protubérances bombées (7b) à leurs extrémités arrondies.

## Claims

1. A heavy-duty hobbing cutter for making teeth by a hobbing process, comprising comblike cutting tooth bars (3), which are adapted to be inserted into transverse grooves (2) of a cylindrical body (1) and have individual gear tooth crests (4) in a helical array over the body, said tooth crests being formed with recesses having surfaces which form abutments for an axial and radial location of reversible cutting inserts (7), which have top and side cutting edges and are adapted to be clamped in the recesses by clamping elements (11), characterized in that the tooth crests (4) of the cutting bars protrude in the cutting direction, the recesses form a known array of alternate left-hand and right-hand teeth and are provided at one of the sides of the tooth crest in the form of a V-shaped groove (6) which is open on four sides, and the reversible cutting inserts consists of bar-shaped reversible cutting inserts (7), which are rectangular in cross-section and which cut each at a side cutting edge and a top cutting edge, which cutting edges have clearance angles determined by the inclination of the surfaces of the V-Shaped groove.

2. A heavy-duty hobbing cutter according to claim 1, characterized in that the body (1) is formed with a helical groove (10) in which the cutting bars (7) are supported against tilting while cutting.

3. A heavy-duty hobbing cutter according to claim 1 or 2, characterized in that the cutting bars (7) are adapted to be fixed in the V-shaped groove (6) by means of overlapping screws (11) having a mushroom head which partly extends into the face of the tooth.

4. A heavy-duty hobbing cutter according to claim 3, characterized in that the mushroom-head screws (11) for the reversible cutting bars (7) are left-hand screws at the left-hand faces of the cutting edges and right-hand screws at the right-hand cutting bars (7).

5. A heavy-duty hobbing cutter according to any of the preceding claims, characterized in that the cutting bars (7) are provided on all sides with rounded ends (7a) between the side cutting edges and the top cutting edges.

6. A heavy-duty hobbing cutter according to any of the preceding claims, characterized in that the cutting bars (7) are provided with alternating convex protuberances (7b) at the rounded ends.

Fig. 1

**Fig. 2**

**Fig. 3**

Fig. 4

Fig. 5